# EUROPEAN PATENT APPLICATION

(11) **EP 1 239 654 A1**
(43) Date of publication of application: **11.09.2002**
(21) Application number: 01830140.8
(22) Date of filing: 28.02.2001
(51) Int. Cl.: H04N 1/028

(54) **An image capturing device**

(71) Applicant: Universita' degli studi di Bologna, 40126 Bologna (IT)
(72) Inventor: Casali, Franco, 40134 Bologna (IT); Morigi, Maria Pia, 48020 S. Agata sul Santerno, Ravenna (IT); Rossi, Massimo, 61029 Urbino, Pesaro (IT)
(74) Representative: Lanzoni, Luciano

(57) **Abstract**

An image capturing device comprises a detector block (2) designed to receive a beam (3) from a target (4) to be imaged, and a processing unit (27) that is designed to reconstruct the image of the target according to a main signal (5) which it receives as input and which is generated by the detector block (2). The device (1) further comprises a deforming element (6) designed to collect the beam (3) through a capture window (7) and to supply it as output through a transmission window (8) differing in shape from the capture window (7).

## Description

The present invention relates to an image capturing device.

Different kinds of image capturing devices are known and used for a wide range of applications in numerous fields, from medical to industrial.

For example, to transfer an image from paper to a computer, a device known as a scanner is used: a scanner consists essentially of a scan window, on which the paper sheet is placed, and a row of optical detectors covering a defined area, usually the width of a standard sheet of paper.

Thanks to an appropriate transport system, the optical detectors sweep (that is, scan) the sheet of paper, gradually capturing the image as they do so. As the detectors sweep over the paper, the image is illuminated by a light source which enables the image itself to be detected.

The main disadvantage of this type of technology is that each detector constitutes a separate reading system, distinct from all the others and having its own electronic circuitry. Moreover, all the detectors have to be sufficiently similar to enable all parts of the image to be captured uniformly. In order to keep production costs down, scanners are usually made with detectors that are not particularly efficient, compensating the low efficiency with very high-intensity light radiation. Although the end results may be of good quality and acceptable for many applications, it is clearly unsuitable for medical applications, where the quantity and intensity of the radiation the patient is subjected to (for example, in radiography or mammography, the specific field to which this invention applies) must remain below well-defined limits, or for industrial applications, where the scanning must take place in a very short space of time.

The need for such large quantities of radiation is due to the fact that the linear optical amplifiers (intensifiers) available today are extremely small and cannot therefore be effectively used in the above mentioned technical fields. In other words, the linear intensifiers known up to now cannot be used to improve the efficiency of the row of detectors to enable smaller quantities of radiation to be used.

One solution might be to apply a single intensifier to each detector but, given the limits of current technology, the result would be mediocre in terms of resolution (instead of 25µm, the detectors would have a resolution of 500µm, unacceptable for medical applications), besides having a high cost.

Another group of known imaging devices is that of video cameras: in a video camera, the target is framed by the lens and projected onto an imaging window. The optical signal thus obtained is converted into an electrical signal and transmitted to a processing unit which reconstructs the image. The imaging window has the shape of a rectangle, whose sides are of well-defined length and substantially similar to each other, that is, they are the same size.

The operating limit of devices of this kind is the limited number of pixels of the imaging window. Thus, the larger the object to be represented in the image is, the lower the resolution of the image and hence the poorer the quality of the reconstructed image.

Looking specifically at the medical field, known apparatus for making radiographs or mammograms operates by sending a beam of rays through the patient to strike a photographic plate positioned on the side of the patient opposite the source of the radiation. The photographic plate is thus exposed. The plate must then be developed (a procedure which takes several minutes) so that it can be examined by medical staff.

The disadvantages of apparatus of this kind are due mainly to the fact that the patient has to be exposed to a considerable dose of radiation and, as is known, excessive exposure to X-rays or other types of radiation may be harmful to health.

Moreover, the lapse of several minutes or more that it takes to develop the plate to make it suitable for examination can create complications of an organisational nature for the provider of the service and at the same time can also create inconvenience for the patient.

Against this background, the main aim of the present invention is to provide a novel image capturing device that permits an appreciable reduction in the intensity of the radiation to which the target to be imaged has to be exposed (this aspect being particularly important in medical applications, as previously noted).

Another aim of the present invention is to provide an image capturing device that can be used to increase the size of the images without losing in resolution and without excessively increasing the cost of the device itself.

The invention has for another aim to provide an image capturing device that makes reconstructed images available immediately, without any loss of time due, for example, to a plate having to be developed.

Yet another aim of the present invention is to provide an image capturing device that detects the X-rays (or other type of radiation) that passes through the sample to be examined when progressive scanning is used.

These and other aims are substantially achieved by an image capturing device as described in the claims herein.

Further characteristics and advantages appear in the following detailed description of a preferred embodiment of an image capturing device according to the invention, illustrated in the accompanying drawings, in which:
- Figure 1 is a block diagram representing the structure of a device according to the present invention;
- Figure 2 is perspective view of a deforming element;
- Figure 2a is a rear view (signal output end) of the element illustrated in Figure 2;
- Figure 2b is a front view (signal input end) of the element illustrated in Figure 2;
- Figure 3 is a cross section of a deformable tape forming part of the element illustrated in Figure 2, through line III-III.

The present invention relates to an image capturing device.

It is worth noting that the invention relates to the creation (and displaying) of graphic representations reproducing not only objects that can be perceived visually but also those that can be detected using rays at a defined frequency that have been emitted, reflected, diffused or diffracted by the objects or that have passed through them.

It is not therefore restricted to devices for conventional scanner hardware used to change the medium on which an existing image appears (for example, an ordinary scanner of the type that converts an image and/or text on paper into digital data which can be displayed on a computer screen).

Indeed, a device according to the present invention can also be used to make television and video cameras, medical apparatus for producing radiographs, mammograms or tomograms, luggage scanning apparatus (for example in airports), industrial apparatus for the detection of faults, even in products that have already been assembled, apparatus for artistic applications not only for reproducing works of art but also for analysing the structures of historic buildings (for example, checking the state and resistance of load-bearing columns, beams and walls of centuries-old churches and buildings).

Thus, a device according to the present invention can be used for any application in which non-invasive inspections of the human body, inanimate objects or buildings are required.

Also, it is important to stress that the term "detector" in this context denotes any device capable of receiving certain types of radiation and producing an output signal applied to appropriate instruments and indicating the presence and/or the intensity of the radiation.

With reference to the accompanying drawings, the numeral 1 denotes in its entirety the image capturing device according to the present invention.

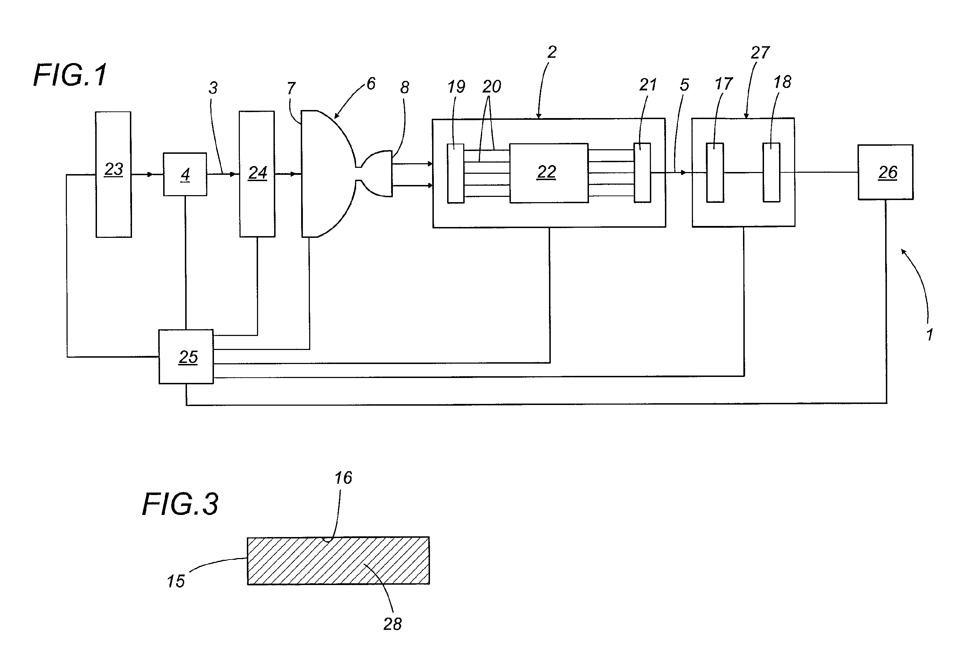

As shown in Figure 1, the device 1 essentially comprises a detector block 2 designed to receive a beam 3 coming from the target 4 to be imaged and to generate a corresponding main signal 5 according to said beam 3.

The reception of the beam 3 is performed by a transducer 19 having a cross section of a well-defined shape.

The transducer 19 absorbs the beam 3 from the target 4 and generates corresponding electrical signals 20, which are then processed by the circuitry connected up downstream of it in order to reconstruct the image.

Advantageously, these electrical signals 20 are a function at least of the intensity of the beam 3 coming from the target 4.

The device 1 may comprise an adapter element 24 positioned between the target 4 to be imaged and the detector block 2. This adapter element 24 receives as input the beam 3 from the target 4 and provides as output an adapted light beam.

In practice, if the beam 3 coming from the target 4 does not fall within the optical frequency range (for example, in medical applications such as mammography, X-rays are used), the adapter element 24 converts the beam 3 from the target 4 into a signal that can be detected by the transducer 19, that is to say, a light beam.

In this case, therefore, the transducer 19 of the detector block 2 will be designed to receive the light beam supplied by the adapter element 24 and to generate electrical signals 20 as a function at least of the intensity of the light beam.

As a general rule, however, the adapter element 24 may be substituted according to the type of application for which the device 1 is being used, and depending on the type of radiation coming from the target 4.

Indeed, the radiation from the target may be electronic, photonic (especially gamma rays and X-rays) or neutronic.

If X-rays are being used, the adapter element 24 may consist of a screen coated with an appropriate salt (for example gadolinium oxy-sulphide or zinc sulphide). If neutronic radiation is being used, the screen may be coated with a compound of lithium-6 associated with zinc sulphide.

The detector block 2 further comprises a readout register 21 connected to the transducer 19 and designed to generate the main signal 5 by merging the electrical signals 20 from the transducer 19 itself.

The readout register 21 is usually made from semiconductor devices of the "charge coupled" type (Charge Coupled Devices - CCD). These registers, used in this context as radiation sensors, are of known type and will not therefore be described in further detail.

Advantageously, there is an intensifier 22 positioned between the transducer 19 and the readout register 21. The intensifier is designed to amplify the electrical signals 20 generated by the transducer 19 in order to improve the reading capability of the register 21 so as to obtain a more accurate reconstruction of the image.

An intensifier of the kind known to experts in the trade and used in Electron Bombarded Charge Coupled Devices (EBCCD) may also be used in the device according to this invention. In EBCCDs, the electrons produced by the interaction between the radiation from the target to be imaged and a sensor are accelerated in a vacuum tube using a strong electric field. The accelerated electrons are then directed at the readout register 21 and, thanks to the charge acquired from the electric field, are able to improve image sharpness.

In this regard, it should be stressed that the transducer 19 and the intensifier 22 usually form part of a single device capable of receiving a light beam as input and providing as output an intensified electron beam as a function of the input light beam.

As mentioned above, the linear intensifiers currently available are unsuitable in terms of size and performance for use in the medical, industrial and artistic applications described above.

In order to overcome this problem without restricting the acquisition methods and geometries of the device 1, the device 1 is equipped with a deforming element 6 associated with the detector block 2, that is to say, positioned between the target 4 to be imaged and the detector 2.

The purpose of the deforming block 6 is to collect through a capture window 7 the beam 3 coming from the target 4 or the output light beam from the adapter element 24 and to provide the beam thus collected as output through a transmission window 8, the shape of the transmission window 8 being different from that of the capture window 7.

The output beam from the deforming element 6 is then detected by the transducer 19 as described above.

The capture window 7, as mentioned above, is designed to receive the beam from the target 4 to be imaged or, if there is an adapter element 24 positioned between the target 4 and the deforming element 6, the light beam output from the adapter element 24. The input radiation is conducted through the structure of the deforming element 6, and leaves the latter through the transmission window 8. In this way, it is possible for a beam detected through a capture window 7 of any shape to be adapted to the shape of the cross section of the transducer 19.

Indeed, the capture window 7 may have any shape. In particular, it may be made in the shape of a polygon, preferably a parallelogram.

It should be noticed that the capture window 7 need not lie on a flat surface but may lie on a contoured or other type of surface.

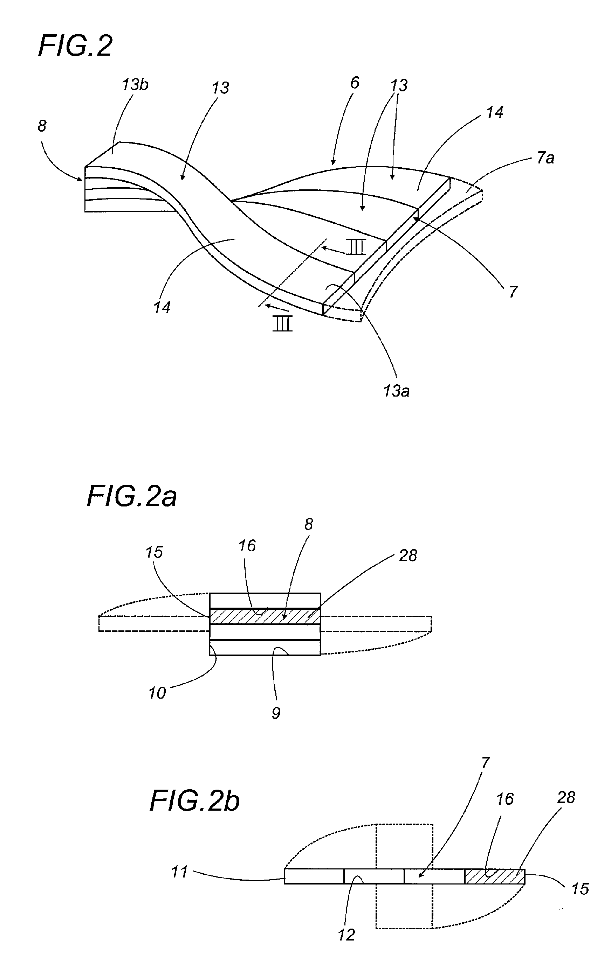

For example, in some applications (such as mammography), the capture window 7 may form a rounded surface, as shown by the portion 7a outlined by the dashed line in Figure 2.

For applications such as tomography, on the other hand, the capture window 7 may need to completely surround the sample to be examined. For this purpose, two separate deforming elements are used, each having a capture window that lies on a curved surface. The two capture windows are then placed opposite each other and the sample to be examined is then placed between them. In this way, the detected beams from the sample come from all directions, with obvious advantages for the performance of tomograms.

In this regard, it is important to stress that the modularity of the deforming elements is a fundamental feature of a device according to the present invention. Thus, the device 1 may be equipped with any number of deforming elements 6 which are arranged in such a way that the capture windows 7 are side by side, face to face or inclined relative to each other so as to optimise detection of the radiation from the sample to be examined.

In most cases, the capture window 7 has the shape of a rectangle delimited by a first length 12 and by a first width 11 (see Figure 2b).

The capture window 7 extends primarily in a direction parallel to the first length 12, that is to say, the first length 12 is larger than the first width 11. In particular, the ratio of the first length 12 to the first width 11 is preferably a value greater than two.

In a preferred embodiment such as that illustrated in Figures 2, 2a and 2b, the ratio of the first length 12 to the first width 11 is much greater than 2. Thus, the capture window 7 has a substantially "linear" form, that is to say, it is much longer than it is wide so that the shape of the capture window 7 is very similar to the shape formed by the sensors of a conventional scanner.

As mentioned above, if the detector block 2 is equipped with the intensifier 22, the cross section of the transducer 19 has the shape of a rectangle whose dimensions cannot be varied and, in particular, cannot reproduce a linear form such as that of the capture window 7 described above. The fact that the transmission window 8 differs from the capture window 7 means that the two windows may be substantially different in shape (for example one triangular and the other square), or similar in shape but different in size.

For example, in the case described above where the capture window 7 has the shape of a rectangle, with a first length 12 and a first width 11, the transmission window 8 might also be rectangular, with a second length 9 different from the first length 12 and a second width 10 different from the first width 11 (see Figure 2a).

Similarly, the first length 12 may in some cases be the same as the second width 10 and the first width 11 may be the same as the second length 9. In other words, the transmission window 8 may be the same shape and size as the capture window 7 but rotated by a defined angle.

With reference to Figure 2, the deforming element 2 comprises a plurality of long portions 13, each having a first end 13a and a second end 13b opposite the first end.

The first ends 13a of the long portions 13 are positioned side by side to form the capture window 7, and the second ends 13b positioned side by side to form the transmission window 8.

Each of the long portions 13 may consist of a deformable tape 14, preferably made from optical fibre.

As shown in Figure 3, each deformable tape 14 has a rectangular cross section 28 formed by a first edge 15 and a second edge 16 adjacent to the first edge. To form the capture window 7, the first end 13a of each deformable tape 14 is placed in contact with at least one adjacent deformable tape 14 along the first edge 15. This arrangement makes it possible to form a "linear" capture window 7 having the above mentioned characteristics.

The transmission window 8, on the other hand, is formed by placing the second end 13b of each deformable tape 14 in contact with at least one adjacent deformable tape 14 along the second edge 16.

The result is an assembly of optical fibres arranged in fan-like manner which detects the beam coming from the target 4 through a substantially "linear" capture window 7 and which provides a corresponding output through a substantially rectangular transmission window (whose edges are the same length).

To perform the capturing operation, the target 4 is ideally subdivided into a plurality of portions each being substantially the same in shape as the capture window 7; each portion is in turn composed of a plurality of sectors.

The capture window 7 is designed in particular to receive the beam from one of the portions which the target 4 is divided into. Each of the long portions 13 making up the capture window 7 is in turn designed to detect the beam from a corresponding sector forming part of the portion of the target 4 corresponding to the capture window 7.

To reconstruct the image, the main signal 5 generated by the readout register 21 is applied to the input of a processing unit 27.

The latter comprises a first reconstruction block 17 to whose input the main signal 5 is applied and which is designed to reconstruct the target 4 image portion corresponding to the capture window 7.

A second reconstruction block 18 is connected downstream of the first reconstruction block 17, from which it receives the reconstructed image portions, and is designed to assemble all the reconstructed portions to form the single image required.

The device 1 may further comprise means 26 for displaying the reconstructed image and connected downstream of the processing unit 27. This means the reconstructed image can be seen and examined immediately without waiting for further processing by separate means.

The display means 26 may consist, for example, of a computer screen or a printer.

In some applications, such as medical applications for example, the device 1 is equipped with a source 23 of radiation at a defined frequency which is directed at the target 4 to be imaged.

The beam 3 collected by the detector block 2 is thus obtained by the interaction between the defined frequency radiation and the target 4 to be imaged.

For example, in the case of a mammogram, a beam of X-rays is directed at the patient, goes through the patient and then through the adapter element 24 (which advantageously has a phosphor layer to convert the X-rays into light rays) to reach the capture window 7 of the detector block 2. The light beam is then treated and processed as described above.

In general, to enable the capture window 7 to fully scan the target 4 and to successively capture all the target 4 image portions making up the complete image of the target 4, the device 1 is equipped with transport means 25 which enable the capture window 7 and the target 4 to move relative to each other.

Depending on requirements and applications, the transport means 25 may operate only on the target 4 (sweeping it slowly in front of the capture window 7, which in this case does not move) or they may operate on both the target 4 and the capture window 7, for example when extremely rapid scans are necessary.

The transport means may advantageously operate also on the radiation source 23.

Usually, it is necessary to move the source 23 and the capture window 7 in parallel and at the same speed, while the target 4 to be imaged is held still.

This is because the beam which is emitted by the source 23 and which passes through the target 4 must reach the capture window 7 in a direction that is substantially perpendicular to the capture window 7 itself, in order to enable the detector block 2 to acquire the image of the target 4 correctly and to reconstruct it faithfully.

However, for some special applications, as in the field of art, for example, where the object to be examined cannot be moved on account of its size or weight, both the target 4 and the source 23 may remain stationary while the transport means 25 operate only on the capture window 7.

Obviously, if the capture window 7 is moved, it may be necessary to translate and/or rotate the entire deforming element 6 and, possibly, the other elements of the device 1, too. The above mentioned transport means 25 may therefore operate on any part of the device 1 to permit efficient, reliable reconstruction of the image of the target 4.

The invention has significant advantages.

First of all, it can collect the rays from portions of the target to be imaged differing in shape from the figure defined by the input of the detector block.

Further, a device according to the present invention permits the use of image intensifiers where the portions of the target to be imaged differ in shape from the figure defined by the input of the detector block.

Another advantage is that the device according to the invention performs well on images of all sizes, allowing an image of considerable size to be reconstructed without adversely affecting the resolution of the image itself.

The invention described can be subject to modifications and variations without thereby departing from the scope of the inventive concept. Moreover, all the details of the invention may be substituted by technically equivalent elements.

## Claims

1. An image capturing device comprising: a detector block (2) designed to receive a beam (3) from a target (4) to be imaged and to generate a corresponding main signal (5) as a function of said beam; and a processing unit (27) which uses as its input the main signal (5) generated by the detector block (2) to reconstruct the image of the target; the device being **characterised in that** it further comprises a deforming element (6) connected to the detector block (2) and designed to collect through a capture window (7) the beam coming from one or more sectors of the target (4) to be imaged and to provide said beam as output through a transmission window (8) whose shape differs from the shape of the capture window (7).

2. The device according to claim 1, **characterised in that** the capture window (7) of the deforming element (6) has the shape of a polygon, especially a parallelogram and preferably a rectangle.

3. The device according to claim 2, **characterised in that** the capture window (7) of the deforming element (6) has the shape of a rectangle with a first length (12) and a first width (11), and the transmission window (8) has the shape of a rectangle with a second length (9) and a second width (10), the first length (12) being different from the second length (9), and the first width (11) being different from the second width (10).

4. The device according to claim 3, **characterised in that** the capture window (7) of the deforming element (6) extends primarily in one direction, being much longer than it is wide, the ratio of the first length (12) to the first width (11) being preferably greater than two.

5. The device according to any of the foregoing claims, **characterised in that** the deforming element (6) comprises a plurality of long portions (13), each having a first end (13a) positioned next to the first ends (13a) of the long portions (13) adjacent to it to form the capture window (7), and second end (13b) opposite the first end (13a) and positioned next to the second ends (13b) of the long portions (13) adjacent to it to form the transmission window (8).

6. The device according to claim 5, **characterised in that** each long portion (13) consists of a deformable tape (14), preferably made from optical fibre.

7. The device according to claim 6, **characterised in that** each deformable tape (14) has a rectangular cross section (28) formed by a first edge (15) and a second edge (16) adjacent to the first edge (15).

8. The device according to claim 7, **characterised in that** the first end (13a) of each deformable tape (14) is placed in contact with at least one adjacent deformable tape (14) along the first edge (15), so as to form the capture window (7).

9. The device according to claim 8, **characterised in that** the second end (13b) of each deformable tape (14) is placed in contact with at least one adjacent deformable tape (14) along the second edge (16) in such a way as to form the transmission window (8).

10. The device according to claim 5, **characterised in that** each long portion (13) is designed to detect the beam (3) from a corresponding sector of the target (4) to be imaged.

11. The device according to claim 1, **characterised in that** the processing unit (27) comprises:
a first reconstruction block (17) designed to receive the main signal (5) and to reconstruct a portion of the image of the target (4), the portion consisting of two or more sectors;
a second reconstruction block (18) designed to receive the image portions reconstructed by the first reconstruction block (17) and to assemble said portions to form a single image.

12. The device according to claim 1, **characterised in that** it further comprises an adapter element (24) positioned between the target (4) to be imaged and the detector block (2), said adapter element (24) being designed to receive the beam (3) from the target (4) and to output an adapted light beam directed at the deforming element (6).

13. The device according to claim 1, **characterised in that** the detector block (2) comprises a transducer (19) designed to detect the beam (3) from the target (4) to be imaged and to generate corresponding electrical signals (20) as a function at least of the intensity of the beam (3) from the target (4).

14. The device according to claim 12, **characterised in that** the detector block (2) comprises a transducer (19) to detect the light beam (3) output by the adapter element (24) and to generate corresponding electrical signals (20) as a function at least of the intensity of said light beam.

15. The device according to claim 13 or 14, **characterised in that** the detector block further comprises a readout register (21) connected to the transducer (19) and designed to merge into the main signal (5) the electrical signals (20) generated by the transducer (19).

16. The device according to claim 15, **characterised in that** the detector block (2) further comprises an intensifier (22) positioned between the transducer (19) and the readout register (21), and designed to amplify the electrical signals (20) generated by the transducer (19).

17. The device according to claim 1, **characterised in that** it further comprises a source (23) of radiation at a defined frequency, preferably X-rays, which is directed at a target to be imaged, the beam (3) from the target (4) to be imaged being obtained by the interaction between the defined frequency radiation and the target (4).

18. The device according to claim 1, **characterised in that** it further comprises transport means (25) to move the target (4) to be imaged and the capture window (7) relative to each other so as to capture a full image of the target (4).

19. The device according to claim 1, **characterised in that** it further comprises means (26) connected to the processing unit (27) and designed to display the reconstructed image so as to make the reconstructed image available to a user.
